# EUROPÄISCHE PATENTSCHRIFT

(11) **EP 3 567 705 B1**
(45) Veröffentlichungstag und Bekanntmachung des Hinweises auf die Patenterteilung: **21.02.2024**
(21) Anmeldenummer: 19167759.0
(22) Anmeldetag: 08.04.2019
(51) Int. Cl.: H02K 11/25

(54) **STATOR FÜR EINE ELEKTRISCHE MASCHINE UND VERFAHREN ZUM HERSTELLEN EINER ELEKTRISCHEN MASCHINE**
STATOR FOR ELECTRICAL MACHINE AND METHOD FOR PRODUCING SAME
STATOR POUR UNE MACHINE ÉLECTRIQUE ET PROCÉDÉ DE FABRICATION D'UNE MACHINE ÉLECTRIQUE

(30) Priorität: 09.05.2018 DE 102018207229
(43) Veröffentlichungstag der Anmeldung: 13.11.2019
(73) Patentinhaber: VOLKSWAGEN AKTIENGESELLSCHAFT, 38440 Wolfsburg (DE)
(72) Erfinder: Dohmann, Mathias, 34212 Melsungen (DE); Petrzik, Gunther, 52070 Aachen (DE)

(56) Entgegenhaltungen:
- EP-A1- 2 924 854
- WO-A1-2016/206857
- WO-A2-2015/097528
- DE-A1-102014 215 916
- DE-A1-102015 110 399
- DE-A1-102016 219 221
- JP-A- 2016 123 155
- JP-A- 2017 046 415
- JP-B1- 6 282 791
- US-A1- 2019 267 871

## Beschreibung

Stator für eine elektrische Maschine und Verfahren zum Herstellen einer elektrischen Maschine Die vorliegende Erfindung betrifft einen Stator für eine elektrische Maschine mit einer Spule mit einer Spulenwicklung oder einer Hairpinwicklung und einem Temperatursensor, wobei der Stator ein Wärmeleitelement aufweist, wobei der Temperatursensor in direktem thermischen Kontakt mit dem Wärmeleitelement angeordnet ist. Ferner betrifft die vorliegende Erfindung eine elektrische Maschine und ein Verfahren zum Herstellen einer elektrischen Maschine.

### Technologischer Hintergrund

Elektrische Maschinen finden unter anderem Anwendung in Elektro- oder Hybridfahrzeugen. Darüber hinaus werden elektrische Maschinen auch in vielen weiteren Vorrichtungen und Industriezweigen verwendet.

Eine elektrische Maschine umfasst einen Rotor und einen Stator. Der Stator weist in der Regel eine Spule zur Erzeugung eines magnetischen Wechselfelds auf. Der Rotor ist mit Magneten ausgestattet und rotierbar gelagert, wobei eine Rotation des Rotors durch die Wechselwirkung des magnetischen Wechselfelds der Spule mit dem Magnetfeld der Magneten des Rotors erzeugt wird.

Insbesondere bei der Anwendung in Elektrofahrzeugen oder Hybridfahrzeugen werden hohe Anforderungen an die Leistung der elektrischen Maschine gestellt. Aufgrund der durch die Leistungsabgabe entstehenden Wärmeentwicklung muss die Temperatur der elektrischen Maschine, und insbesondere die der thermisch hoch belasteten Statorspule mittels Temperatursensoren überwacht werden.

Aus der JP 2017 046415 A ist ein Stator mit integriertem Temperatursensor bekannt. US 2019/267871 A1 offenbart einen Sensorhalter des Standes der Technik.

Aus der DE 10 2015 222 720 A1 ist ein Stator mit integriertem Temperatursensor bekannt, wobei ein Sensorkopf des Temperatursensors in einem Wickelkopf der elektrischen Spule positioniert ist, um eine Temperatur des Wickelkopfes zu erfassen. Zum Positionieren des Sensorkopfes im Wickelkopf ist ein Sensorträger vorgesehen, den ein Monteur in den Wickelkopf einstecken kann. Anschließend wird der Sensor in ein Führungselement des Sensorträgers eingeschoben. Der Sensorkopf und der Sensorträger werden mittels Imprägnierharz in dem Wickelkopf vergossen.

Aus der DE 10 2012 016 913 A1 ist eine Abdeckhaube für einen Elektromotor bekannt. Die Abdeckhaube weist einen Aufnahmeraum auf, in dem wenigstens ein Temperatursensor untergebracht ist. Die Temperatursensoren werden so in dem Aufnahmeraum angeordnet, dass sie bei angeordneter Abdeckhaube zwischen den Wicklungsköpfen der Statorwicklung liegen und berührungsfrei die Temperatur der Wicklungsköpfe erfassen.

Die DE 10 2016 216 933 A1 offenbart eine E-Maschine und ein Hybridmodul mit einer E-Maschine. Die E-Maschine weist einen Statorträger, einen Temperatursensor und einen Stecker auf. Ein Temperatursensor wird zwischen zwei Statorwicklungen angeordnet, und ein Temperatursensorkabel wird an Kabelanschlüssen des Steckers angeschlossen.

Aus der DE 10 2016 219 221 A1 ist ein Formstabstator für einen Elektromotor sowie ein Verfahren zur Herstellung von dessen elektrischer Verschaltung bekannt. Der Formstabstator umfasst einen Statorkörper, der einen Wickelkopf aufweist, und am Wickelkopf vorgesehene Formstäbe für die elektrische Verbindung des Wickelkopfs mit elektrischen Anschlusselementen, die für den elektrischen Anschluss der Versorgungsleitungen des Formstabstators bestimmt sind. An dem Wickelkopf ist ein aus elektrisch isolierendem Material gebildetes Positionierungselement befestigt, das als Positionierungsvorrichtung für die Anbringung der Anschlusselemente dient. In einer Tasche des Positionierungselements ist ein Temperatursensor angeordnet.

Die DE 10 2015 110 399 A1 offenbart eine Temperaturüberwachungsanordnung zur Überwachung der Wicklungen eines Motors umfassend wenigstens einen außerhalb und beabstandet zu den Wicklungen des Motors angeordneten Temperatursensor oder Thermoschalter, wenigstens ein wärmeleitendes Bauelement, das sich von einem ersten Bauelementabschnitt zur Wärmekopplung und Wärmeübertragung kontaktierend an oder benachbart zu den Wicklungen zu einem zweiten Bauelementabschnitt zur Wärmekopplung und Wärmeübertragung an oder benachbart zum Temperatursensor erstreckt.

Aus der WO 2016/206857 A1 ist eine Elektromotorvorrichtung, insbesondere bürstenlose Gleichstrommotorvorrichtung, bekannt, mit zumindest einer Wicklungseinheit, mit zumindest einer Steuerelektronikeinheit und mit zumindest einer Temperaturmesseinheit, die zumindest ein Temperaturmesselement aufweist, das an der Steuerelektronikeinheit, insbesondere an einer Platine der Steuerelektronikeinheit, angeordnet ist, wobei die Temperaturmesseinheit zumindest ein verschieden von einem Luftspalt ausgebildetes Wärmeleitelement umfasst, das zumindest ein Wicklungselement der Wicklungseinheit und das zumindest eine Temperaturmesselement miteinander verbindet.

Die DE 10 2014 215 916 A1 offenbart eine Sensoreinrichtung zur Bestimmung der Temperatur von einem Stator eines Elektromotors, mit einem Sensorgehäuse mit einem Sensor zur Erfassung der Temperatur, wobei der Sensor in dem Sensorgehäuse angeordnet ist, wobei das Sensorgehäuse einen Bodenabschnitt mit einem Boden zur Auflage auf den Stator in einer Erfassungsrichtung und einen Basisabschnitt zur Befestigung der Sensoreinrichtung aufweist, wobei der Sensor die Temperatur über den Boden erfasst, wobei der Bodenabschnitt relativ zu dem Basisabschnitt in der Erfassungsrichtung bewegbar angeordnet ist und wobei die Sensoreinrichtung zum Einsatz in eine Aufnahmeöffnung eines Flansches des Elektromotors ausgebildet ist.

Aus der WO 2015/097528 A2 ist ein Stator für eine rotierende elektrische Maschine bekannt, welcher einen Statorkern, Drehstromspulen und einen Sternpunktanschlussleiter aufweist. Die Drehstromspulen sind um den Statorkern gewickelt. Der Sternpunktanschlussleiter ist mit jeder der Drehstromspulen verbunden. Der Sternpunktanschlussleiter umfasst einen gebogenen Leiter. An dem Leiter kann ein Temperatursensor angeordnet sein.

Bei anderen bekannten Konzepten wird ein Temperatursensor auf einen Wickelkopf der Spule des Stators bandagiert oder auf dem Wickelkopf angeclipst.

Aufgrund der aufwendigen, von einem Monteur vorzunehmenden Handgriffe zur Anordnung eines Temperatursensors an einem Stator sind die aus dem Stand der Technik bekannten Ansätze zur Bereitstellung eines Stators mit einem Temperatursensor nur schlecht automatisierbar.

Ferner sind bei den bekannten Lösungen die Temperatursensoren fest mit dem Stator verbunden und müssen vor dem Imprägnieren am Stator angebracht werden. Die Handhabung der aus dem Stand der Technik bekannten Statoren wird zudem dadurch erschwert, dass während der Montage das Temperatursensorkabel gehalten werden muss.

### Darstellung der Erfindung: Aufgabe, Lösung, Vorteile

Der vorliegenden Erfindung liegt die Aufgabe zugrunde, einen Stator für eine elektrische Maschine mit einer Spule mit einer Spulenwicklung oder einer Hairpinwicklung und einem Temperatursensor bereitzustellen, dessen Montage einfach und leicht automatisierbar ist, welcher eine zuverlässige Temperaturmessung gestattet und kostengünstig herzustellen ist. Zur Lösung der Aufgabe wird ein Stator für eine elektrische Maschine mit einer Spule mit einer Spulenwicklung oder einer Hairpinwicklung und einem Temperatursensor, wobei der Stator ein Wärmeleitelement aufweist, wobei der Temperatursensor in direktem thermischen Kontakt mit dem Wärmeleitelement angeordnet ist, vorgeschlagen, wobei das Wärmeleitelement außerhalb der Spule angeordnet ist und/oder von der Spule absteht, wobei der Stator einen Stromleiter aufweist, wobei der Stromleiter eine Stromschiene ist, wobei das Wärmeleitelement aus dem Stromleiter herausgeformt ist, wobei das Wärmeleitelement ein Teilbereich des Stromleiters ist, wobei der Teilbereich aus einer Erstreckungsebene des Stromleiters herausgebogen ist, und wobei ein Sensorhalter vorgesehen ist, wobei der Sensorhalter ein Halteelement mit einem Aufnahmeraum aufweist, wobei der Temperatursensor und das Wärmeleitelement in dem Aufnahmeraum angeordnet sind, sodass der Temperatursensor in direktem thermischen Kontakt mit dem Wärmeleitelement steht.

Die Spule kann eine herkömmliche Spulenwicklung oder eine Hairpinwicklung aufweisen.

Bei einer Hairpinwicklung werden sogenannte Hairpins an einem Spulenträger des Stators angeordnet. Die aus dem Stator hervorstehenden Enden der Hairpins werden miteinander verbunden, insbesondere verschweißt.

Besonders vorteilhaft ist, dass das Wärmeleitelement, welches in direktem thermischen Kontakt mit dem Temperatursensor steht, außerhalb der Spule angeordnet ist und/oder von der Spule absteht.

Durch die Anordnung des Wärmeleitelementes außerhalb der Spule oder durch das Abstehen des Wärmeleitelementes von der Spule ist eine Herstellung des thermischen Kontakts zwischen Wärmeleitelement und Temperatursensor ohne aufwendige Montageschritte durchführbar. Insbesondere muss der Temperatursensor nicht mehr zwischen die Windungen der Spule gesteckt werden. Hinzu kommt, dass der Temperatursensor durch Vorsehen eines außerhalb der Spule angeordneten oder von der Spule abstehenden Wärmeleitelements nicht vor dem Imprägnieren des Stators angebracht und nicht fest mit dem Stator verbunden werden muss. Das außerhalb der Spule angeordnete und/oder von der Spule abstehende Wärmeleitelement bietet eine einfache, zur Kontaktierung mit einem Temperatursensor ausgebildete Wärmeschnittstelle, über die eine zuverlässige Temperaturmessung ermöglicht wird. Insbesondere bei aus dem Stand der Technik bekannten, an einem Wickelkopf angeclipsten oder aufbandagierten Temperatursensoren lässt sich eine derartig einfache Kontaktierung und zuverlässige Temperaturmessung nicht erzielen.

Bevorzugt ist der Temperatursensor ausgebildet, über den direkten thermischen Kontakt mit dem Wärmeleitelement eine Temperatur der Spule und/oder eines Stromleiters zu ermitteln.

Bevorzugt kann vorgesehen sein, dass das Wärmeleitelement stiftförmig und/oder drahtförmig und/oder stabförmig ist.

Durch eine stiftförmige, drahtförmige oder stabförmige Ausgestaltung des Wärmeleitelementes wird der Ort der Temperaturmessung präzise lokalisiert, wodurch eine zuverlässige Temperaturmessung ermöglicht wird. Ein weiterer Vorteil eines stiftförmigen, drahtförmigen oder stabförmigen Wärmeleitelementes besteht darin, dass die thermische Kontaktierung mit einem Temperatursensor vereinfacht wird.

Weiter kann mit Vorteil vorgesehen sein, dass das Wärmeleitelement eine Temperaturlanze, insbesondere eine Temperaturlanze aus Kupfer, ist.

Eine außerhalb der Spule angeordnete oder von der Spule abstehende Temperaturlanze ermöglicht eine präzise und zuverlässige Temperaturmessung. Aufgrund der Ausgestaltung des Wärmeleitelementes als Temperaturlanze und deren Anordnung außerhalb der Spule oder abstehend von der Spule wird eine einfache Kontaktierung mit dem Temperatursensor ermöglicht. Unter einer Kontaktierung kann ein direkter Kontakt verstanden werden. Ein indirekter thermischer Kontakt ist eine nicht erfindungsgemäße Option, und kann als eine berührungsfreie relative Anordnung von Temperatursensor und Wärmeleitelement ausgebildet sein, derart, dass thermische Energie über Konvektion eines Mediums wie Luft oder elektromagnetische Strahlung von dem Wärmeleitelement an den Temperatursensor übertragen wird.

Eine Temperaturlanze aus Kupfer ist besonders für eine effektive Wärmeleitung und Wärmeübertragung geeignet.

Bevorzugt ist vorgesehen, dass der Stator ein Hairpin-Stator ist. In einer nicht von der Erfindung umfassten Ausführungsform kann das Wärmeleitelement als ein verlängerter Endabschnitt eines ersten Hairpins ausgebildet sein,

Bei einem Hairpinstator werden sogenannte Hairpins in den Wicklungsträger des Stators eingeführt. Endseitig, in einer Axialrichtung des Stators, ragen die Hairpins aus dem Stator hervor. Die aus dem Stator hervorragenden Endabschnitte von mindestens einem ersten Hairpin und einem zweiten Hairpin werden durch Verschweißen an einem Schweißpunkt miteinander verbunden. Die an ihren Endabschnitten miteinander verbundenen oder verschweißten Hairpins bilden den Spulen- oder Wickelkopf der Spule aus.

Bevorzugt kann vorgesehen sein, dass ein erster der Hairpins einen verlängerten Endabschnitt aufweist, welcher über den Spulenkopf oder den Wickelkopf hinausragt. Die Verbindung zwischen dem ersten Hairpin und dem zweiten Hairpin wird dann in einer Weise hergestellt, dass der verlängerte Endabschnitt des ersten Hairpins in einer axialen Richtung des Stators über den Schweißpunkt und den Endabschnitt des zweiten Hairpins hinausragt. Der verlängerte Endabschnitt des ersten Hairpins ist dann bevorzugt als freistehender Endabschnitt ausgebildet. Der aus der Spule, insbesondere dem Spulenkopf der Spule, hervorstehende verlängerte Endabschnitt des ersten Hairpins kann dann als Wärmeleitelement ausgebildet sein, mit dem der Temperatursensor thermisch kontaktiert wird. Da der verlängerte Endabschnitt aus der Spule oder dem Spulenkopf herausragt oder von diesem hervorsteht, kann der Temperatursensor einfach und insbesondere nach dem Imprägnieren des Stators mit dem Wärmeleitelement thermisch kontaktiert werden. Zudem ist die Montage leicht automatisierbar.

Bevorzugt ist vorgesehen, dass das Wärmeleitelement aus der Spule, insbesondere aus einem Spulenkopf der Spule, hervorsteht.

Erfindungsgemäß ist vorgesehen, dass der Stator einen Stromleiter aufweist und dass das Wärmeleitelement aus dem Stromleiter herausgeformt ist. So kann die Strom- bzw.

Leistungsversorgung der Spule des Stators durch eine Sternschaltung oder eine Dreiecksschaltung realisiert sein. Vorteilhaft an der Herausformung des Wärmeelementes aus dem Stromleiter ist, dass die Stromleiter der Sternschaltung oder der Dreiecksschaltung als sogenannte "Hotspots" aufgrund der hohen Stromdichte eine sehr hohe Temperatur aufweisen können. Durch die Messung der Temperatur über ein aus einem Stromleiter herausgeformtes Wärmeleitelement können derartige Hotspots präzise und zuverlässig überwacht werden. Ein weiterer Vorteil der Herausformung des Wärmeleitelementes aus dem Stromleiter besteht darin, dass die Spule des Stators einer elektrischen Maschine imprägniert werden kann, bevor der Temperatursensor angebracht wird.

Es kann vorgesehen sein, dass der verlängerte Endabschnitt des ersten Hairpins über einen Verbindungspunkt, insbesondere über einen Schweißpunkt, des ersten Hairpins mit einem zweiten Hairpin hinaussteht.

Insbesondere wenn der verlängerte Endabschnitt des ersten Hairpins über den Verbindungspunkt in einer Axialrichtung des Stators und somit über den Spulen- oder Wickelkopf der Spule des Stators hinausragt, kann eine einfache und sichere thermische Kontaktierung von Temperatursensor und Wärmeleitelement hergestellt werden. Erfindungsgemäß ist vorgesehen, dass der Stromleiter eine Stromschiene ist, wobei die Stromschiene eine Sternschiene oder ein Neutralleiter einer Sternschaltung ist.

Aufgrund der hohen Stromdichte stellt insbesondere die Sternschiene oder der Neutralleiter einer Sternschaltung einen Hotspot dar. Erfindungsgemäß ist das Wärmeleitelement aus einer Sternschiene oder einem Neutralleiter einer Sternschaltung herausgeformt.

Erfindungsgemäß ist ferner vorgesehen, dass das Wärmeleitelement ein Teilbereich des Stromleiters, insbesondere der Stromschiene, ist, wobei der Teilbereich aus einer Erstreckungsebene des Stromleiters, insbesondere der Stromschiene, herausgebogen ist. Bevorzugt steht das Wärmeleitelement in einem Winkel zu der Erstreckungsebene des Stromleiters, insbesondere der Stromschiene.

Die Stromschiene kann dabei im Wesentlichen eben ausgebildet sein und sich in einer Erstreckungsebene erstrecken. Innerhalb der Erstreckungsebene kann die Stromschiene zudem im Wesentlichen bogenförmig ausgeführt sein. Die Bogenform kann dabei einem vollen Kreis oder auch nur einem Teilausschnitt eines Kreises entsprechen.

Die Stromschiene weist mindestens einen Teilbereich, wie einen Fortsatz oder einen Vorsprung oder ähnliches, auf. Der Teilbereich, der Fortsatz oder der Vorsprung, ist oder wird aus der Erstreckungsebene herausgebogen und bildet das Wärmeleitelement. Besonders bevorzugt steht das derart ausgebildete Wärmeleitelement in einem Winkel zu der Erstreckungsebene des Stromleiters, insbesondere der Stromschiene. Da die Stromschiene im zusammengebauten Zustand des Stators, beziehungsweise der elektrischen Maschine, im Wesentlichen in einer Ebene senkrecht zu der Axialrichtung des Stators angeordnet werden kann, wird durch Herausbiegen des Teilbereiches des Stromleiters, beziehungsweise der Stromschiene, das so gebildete Wärmeleitelement in Richtung der Axialrichtung des Stators gebogen. Hierdurch vereinfacht sich eine Montage und thermische Kontaktierung des Temperatursensors an dem Wärmeleitelement in der Axialrichtung des Stators.

Der Winkel zwischen Wärmeleitelement und Stromleiter beziehungsweise Stromschiene kann zwischen 45° und 90°, bevorzugt zwischen 80° und 90°, besonders bevorzugt zwischen 85° und 90°, ganz besonders bevorzugt 90°, betragen.

Mit weiterem Vorteil kann vorgesehen sein, dass das Wärmeleitelement von dem Stator und/oder dem Spulenkopf in einer Radialrichtung des Stators oder in einer Axialrichtung des Stators absteht.

Wenn das Wärmeleitelement in einer Axialrichtung des Stators absteht, wird eine Montage besonders vereinfacht. Insbesondere wird die Montage des Temperatursensors an dem Stator beziehungsweise an dem Wärmeleitelement vereinfacht, da die Fügerichtung oder Montagerichtung des Temperatursensors in diesem Fall der Montagerichtung des Resolvers oder Winkelgebers des Stators entsprechen kann.

Mit weiterem Vorteil kann vorgesehen sein, dass das Wärmeleitelement und/oder der Temperatursensor endseitig eine Fase aufweist.

Das Vorsehen einer Fase an dem Wärmeleitelement und/oder an dem Temperatursensor ist insbesondere dann vorteilhaft, wenn Temperatursensor und Wärmeleitmittel beim Anordnen des Temperatursensors an dem Wärmeleitmittel in physischen Kontakt miteinander kommen. Durch das Vorsehen einer Fase, auch Einführschräge genannt, endseitig, insbesondere an einer Spitze, des Wärmeleitmittels und/oder des Temperatursensors wird das aneinander Anordnen dieser beiden Elemente vereinfacht. Insbesondere kommt es zu keinen gegenseitigen Blockaden, und der Temperatursensor und das Wärmeleitelement können aneinander gleitend vorbeigeführt werden.

Wenn der Temperatursensor in einem Halteelement angeordnet ist, in welches das Wärmeleitelement beim Anordnen des Temperatursensors an den Stator ebenfalls eingeführt wird, ist das Vorsehen einer Fase an dem Wärmeleitmittel und/oder an dem Temperatursensor vorteilhaft. Beim Stecken des Wärmeleitmittels in das Haltelement wird der Temperatursensor nicht beschädigt, und der Temperatursensor wird zudem nicht aus dem Halteelement herausgedrückt.

Gemäß der Erfindung ist zudem ein Sensorhalter vorgesehen, wobei der Sensorhalter ein Halteelement mit einem Aufnahmeraum aufweist, wobei der Temperatursensor und das Wärmeleitmittel in dem Aufnahmeraum angeordnet sind, sodass der Temperatursensor in direktem thermischen Kontakt mit dem Wärmeleitelement steht.

Die Anordbarkeit oder die Anordnung von Temperatursensor und Wärmeleitelement in einem Aufnahmeraum eines dafür vorgesehenen Halteelements ermöglicht eine präzise relative Positionierung des Wärmeleitelements an dem Temperatursensor. Hierdurch wird eine zuverlässige Temperaturmessung ermöglicht.

Ein weiterer Vorteil des Vorsehens eines Halteelementes mit einem Aufnahmeraum besteht darin, dass die Montage des Temperatursensors weiter vereinfacht wird.

Mit weiterem Vorteil ist vorgesehen, dass der Sensorhalter einen Hauptteil aufweist, wobei der Hauptteil sich im Wesentlichen in einer Ausdehnungsebene erstreckt, wobei der Hauptteil in der Ausdehnungsebene bevorzugt eine im Wesentlichen bogenförmige Ausgestaltung aufweist.

Durch die Ausbildung des Sensorhalters in einer Ausdehnungsebene kann dieser mit besonderem Vorteil auf einer axialen Stirnfläche des Stators angeordnet werden. Insbesondere kann der Sensorhalter parallel zu einer in einer Erstreckungsebene ausgerichteten und am Stator befestigten Stromschiene angeordnet werden.

Der bevorzugte Sensorhalter wird bei der Montage derart an einer axialen Stirnseite des Stators angeordnet, dass die Ausdehnungsebene im Wesentlichen senkrecht zur Axialrichtung des Stators ausgebildet ist. Insbesondere wird der Sensorhalter bevorzugt im Bereich des Wickelkopfes oder des Spulenkopfes auf einem den Stator umlaufenden Rand aufgesetzt. Zwischen dem Rand des Stators und dem Sensorhalter kann zudem ein Geberelement, beispielsweise für einen Drehwinkelsensor, angeordnet sein.

Bevorzugt kann vorgesehen sein, dass das Halteelement im Wesentlichen senkrecht zu der Ausdehnungsebene an dem Hauptteil des Sensorhalters angeformt oder angeordnet ist.

Durch die senkrechte Anordnung des Halteelementes an dem Hauptteil kann der Sensorhalter, bevorzugt mit eingesetztem Temperatursensor, entlang der Axialrichtung des Stators und/oder in der Fügerichtung des Resolvers auf den Rand des Stators aufgesetzt werden. Mit dieser Maßnahme kann gleichzeitig das, in einem rechten Winkel von dem Hauptteil abstehende, Halteelement auf das in Axialrichtung aus dem Stator oder der Spule hervorstehende oder außerhalb der Spule angeordnete Wärmeleitelement aufgesteckt werden.

Der Temperatursensor und das Wärmeleitelement sind im montierten Zustand in dem Halteelement angeordnet und zusammen mit dem Halteelement im Wesentlichen senkrecht zu der Ausdehnungsebene des Sensorhalters und/oder zu der Erstreckungsebene der Stromschiene ausgerichtet oder angeordnet.

Bevorzugt kann ferner vorgesehen sein, dass das Halteelement eine Einführöffnung zum Einführen des Wärmeleitelementes aufweist, wobei der Aufnahmeraum derart ausgebildet ist, dass das Wärmeleitelement beim Einführen des Wärmeleitelementes in den Aufnahmeraum durch die Einführöffnung parallel zum Temperatursensor geführt wird und neben dem Temperatursensor anordbar oder angeordnet ist.

Das Vorsehen einer Einführöffnung erleichtert das Einführen des Wärmeleitelementes in das Halteelement, sodass die Montage des Stators vereinfacht wird.

Ferner wird durch die parallele Führung des Wärmeleitelementes zum Temperatursensor und die sich daraus ergebende parallele Anordnung des Wärmeleitelementes mit dem Temperatursensor ein wohldefinierter Überlappungsbereich von Wärmeleitelement und Temperatursensor bereitgestellt. Hierdurch kann die Wärmeübertragung von dem Wärmeleitelement auf den Temperatursensor und somit auch die Temperaturmessung optimiert werden.

Besonders bevorzugt ist der Temperatursensor und/oder das Wärmeleitelement an zumindest einer Seite flach oder eben ausgebildet.

Durch die flache oder ebene Ausgestaltung mindestens einer Seite des Temperatursensor und/oder des Wärmeleitelements kann der direkte thermische Kontakt zwischen Wärmleitelement und Temperatursensor optimiert werden, sodass die Temperaturmessung verbessert wird.

Ferner kann vorgesehen sein, dass die Einführöffnung eine Fase aufweist, wobei bevorzugt die Fase ausgebildet ist, das Wärmeleitelement beim Einführen des Wärmeleitelementes in die Einführöffnung zu führen.

In besonders vorteilhafter Weise kommt es somit beim Einführen des Wärmeleitelementes in das Halteelement zu einer Wechselwirkung zwischen der Fase der Einführöffnung und dem Wärmeleitelement, insbesondere der gegebenenfalls vorhandenen Fase des Wärmeleitelementes, sodass das Wärmeleitelement weitestgehend fehlerunanfällig und automatisiert in die Einführöffnung und somit in den Aufnahmeraum des Halteelementes eingeführt werden kann. Die Fase stellt dabei eine Einführschräge für das Wärmeleitelement dar, entlang welcher das Wärmeleitelement, insbesondere die Spitze des Wärmeleitelements, gleitend in die Einführungsöffnung geführt wird. Insbesondere wird das Wärmeleitelement beim Einführen des Wärmeleitelements durch die Einführöffnung des Halteelementes in den Aufnahmeraum des Halteelementes eingeleitet und kommt parallel zu dem Temperatursensor zu liegen.

Mit weiterem Vorteil kann vorgesehen sein, dass der Sensorhalter, insbesondere der Hauptteil des Sensorhalters, einen Kabelkanal aufweist, wobei der Kabelkanal einen Boden und Seitenwände umfasst, wobei ein Temperatursensorkabel in dem Kabelkanal anordbar oder angeordnet ist.

Aus dieser Maßnahme ergibt sich der Vorteil, dass das Temperatursensorkabel während der Montage des Temperatursensor beziehungsweise des Sensorhalters am Stator nicht von einem Monteur gehalten werden muss. Die Montage des Stators kann daher weiter vereinfacht und automatisiert werden.

Mit weiterem Vorteil kann vorgesehen sein, dass die Seitenwände des Kabelkanals Vorsprünge aufweisen, sodass das in dem Kabelkanal angeordnete Temperatursensorkabel von den Vorsprüngen in den Kabelkanal gehalten oder arretiert wird.

Die Vorsprünge können dabei als Rastnasen, Haken oder Zapfen ausgebildet sein. Insbesondere kann das Temperatursensorkabel vor der Montage des Stators in den Kabelkanal eingesetzt und bevorzugt durch Druck derart eingeclipst werden, dass das Temperatursensorkabel von den Vorsprüngen in dem Kabelkanal gehalten oder arretiert wird. Der Sensorhalter kann in Einheit mit dem Temperatursensor leichter gehandhabt werden und ohne Probleme an dem Stator befestigt werden.

Eine weitere Lösung der der Erfindung zugrundeliegenden Aufgabe besteht in der Bereitstellung eines Sensorhalters für einen Temperatursensor für einen vorbeschriebenen Stator.

Eine noch weitere Lösung für die der Erfindung zugrundeliegenden Aufgabe besteht in der Bereitstellung einer elektrischen Maschine mit einem vorbeschriebenen Stator.

Zudem wird eine Lösung für die der Erfindung zugrundeliegenden Aufgabe durch die Bereitstellung eines Verfahrens zum Herstellen einer vorbeschriebenen elektrischen Maschine bereitgestellt, umfassend die Schritte:
- Bereitstellen eines Stators mit einer Spule mit einer Spulenwicklung oder einer Hairpinwicklung, wobei der Stator ein Wärmeleitelement aufweist, wobei das Wärmeleitelement außerhalb der Spule angeordnet ist und/oder von der Spule absteht, wobei der Stator einen Stromleiter aufweist, wobei der Stromleiter eine Stromschiene ist, und wobei das Wärmeleitelement aus dem Stromleiter herausgeformt wird, wobei das Wärmeleitelement ein Teilbereich des Stromleiters ist, wobei der Teilbereich aus einer Erstreckungsebene des Stromleiters herausgebogen ist,
- Anordnen eines Temperatursensors in einem Aufnahmeraum eines Halteelementes eines Sensorhalters,
- Anordnen des Sensorhalters an dem Stator derart, dass das Wärmeleitelement in den Aufnahmeraum des Halteelementes eingeführt wird, sodass der Temperatursensor in direktem thermischen Kontakt mit dem Wärmeleitelement steht.

Mit dem erfindungsgemäßen Verfahren werden die Vorteile des vorbeschriebenen Stators und/oder der vorbeschriebenen elektrischen Maschine erhalten. Insbesondere ergibt sich eine vereinfachte und automatisierte Montage des Stators bzw. der elektrischen Maschine. Die für den vorbeschriebenen Stator offenbarten Merkmale sind in sinngemäßer Weise auf das Verfahren übertragbar.

Bevorzugt umfasst der Schritt des Bereitstellens eines Stators den Schritt des:
- Ausbildens des Wärmeleitelementes aus einem verlängerten Endabschnitt eines ersten Hairpins und/oder Ausbildens des Wärmeleitelementes durch Herausbiegen eines Teilbereichs eines Stromleiters, insbesondere einer Stromschiene, aus einer Erstreckungsebene des Stromleiters.

Ein Stromleiter beispielsweise einer Stern- oder Dreieckschaltung des Stators, insbesondere der Neutralleiter oder der Sternleiter einer Sternschaltung des Stators, stellt aufgrund der hohen in dem Stromleiter auftretenden Stromdichte einen sogenannten "Hotspot" mit einer sehr hohen Temperaturentwicklung dar.

Die Ausbildung des Wärmeleitelementes aus einem Teilbereich des Stromleiters, insbesondere der Stromschiene, ermöglicht somit eine Messung und Überwachung der Temperaturen in einem kritischen Bereich des Stators.

Weiter bevorzugt kann vorgesehen sein, dass das Wärmeleitelement in einer Axialrichtung von dem Stator absteht und dass der Sensorhalter zur Anordnung an dem Stator entlang der Axialrichtung an den Stator herangeführt wird.

Somit entspricht die Montagerichtung des Sensorhalters der Montagerichtung eines Resolvers oder Winkelgebers des Stators. Durch diese gegenseitige Entsprechung der Montagerichtungen wird eine Automatisierung der Herstellung eines Stators bzw. einer elektrischen Maschine bevorteilt.

### Kurze Beschreibung der Figuren

Die Erfindung wird nachstehend anhand der Figuren näher erläutert:

Es zeigen
- Fig. 1: eine perspektivische Ansicht eines Stators einer elektrischen Maschine mit einem Sensorhalter,
- Fig. 2: eine Querschnittsansicht eines Stators einer elektrischen Maschine mit einem Sensorhalter,
- Fig. 3: eine Stromschiene eines Stators,
- Fig. 4: eine weitere Querschnittsansicht eines Stators einer elektrischen Maschine mit einem Sensorhalter,
- Fig. 5: einen Sensorhalter mit Halteelement und Kabelkanal,
- Fig. 6a: ein Gebermodul eines Winkelgebers für eine elektrische Maschine,
- Fig. 6b: einen Temperatursensor mit einem Temperatursensorkabel,
- Fig. 6c: ein Gebermodul mit einem Steckmodul,
- Fig. 7: einen Zusammenbau von Sensorhalter, Temperatursensor, Gebermodul und Steckmodul,
- Fig. 8: eine Explosionsdarstellung des Zusammenbaus der Fig. 7,
- Fig. 9a: eine schematische Darstellung einer bekannten Verbindung von Endabschnitten von Hairpins,
- Fig. 9b: eine schematische Darstellung einer Verbindung eines verlängerten Endabschnitts eines ersten Hairpins mit einem Endabschnitt eines zweiten Hairpins,
- Fig. 9c: eine weitere schematische Darstellung einer Verbindung eines Endabschnitts eines ersten Hairpins mit einem Endabschnitt eines zweiten Hairpins, und
- Fig. 10: ein Ablaufdiagramm eines Verfahrens zur Herstellung einer elektrischen Maschine.

### Ausführliche Beschreibung der Figuren

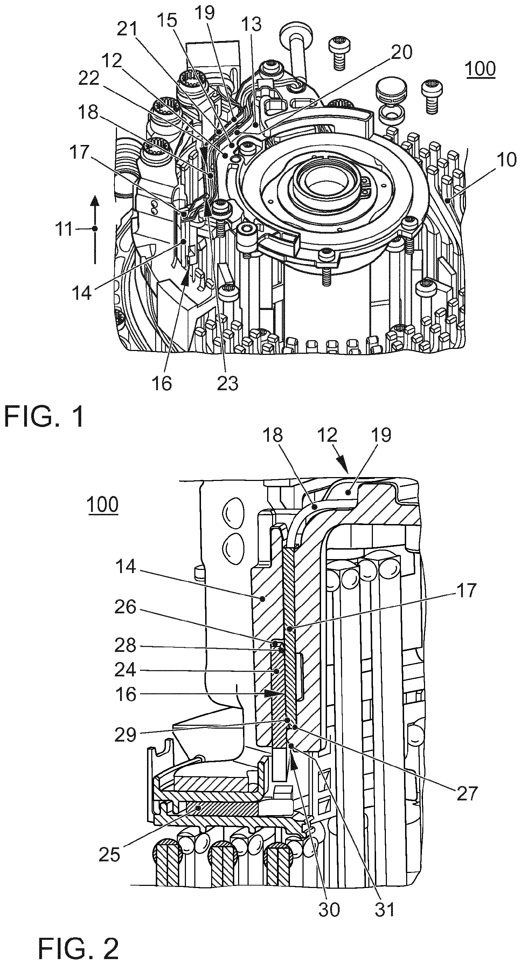

Fig. 1 zeigt eine Explosionsansicht eines Stators 100 für eine elektrische Maschine mit einer Spule 10. Die Spule 10 weist eine Hairpinwicklung auf. Jedoch kann anstatt einer Hairpinwicklung auch eine herkömmliche Spulenwicklung vorgesehen sein. In einer Axialrichtung 11 oberhalb des Stators 100 ist ein Sensorhalter 12 gezeigt. Der Sensorhalter 12 umfasst einen Hauptteil 13 sowie ein Halteelement 14. Das Halteelement 14 ist im Wesentlichen senkrecht zu einer Ausdehnungsebene 15 des Hauptteils 13 an dem Hauptteil 13 angeordnet. Das Halteelement 14 umfasst einen Aufnahmeraum 16. In dem Aufnahmeraum 16 ist ein Temperatursensor 17 angeordnet. Aus dem Halteelement 14 ist ein Temperatursensorkabel 18 herausgeführt. Das Temperatursensorkabel 18 verläuft in einem an dem Sensorhalter 12 ausgebildeten Kabelkanal 19. Der Kabelkanal 19 umfasst Seitenwände 20, 21 sowie einen Boden 22. Ferner weist der Kabelkanal 19 Vorsprünge 23 auf, mit denen das in dem Kabelkanal 19 geführte Temperatursensorkabel 18 in dem Kabelkanal 19 gehalten und arretiert wird.

Fig. 2 zeigt einen quergeschnittenen Ausschnitt eines Bereiches des Stators 100 der Fig. 1. Das Halteelement 14 umfasst einen Aufnahmeraum 16, in dem der Temperatursensor 17 und ein Wärmeleitelement 24 angeordnet sind. Das Wärmeleitelement 24 ist aus einer Stromschiene 25 herausgebogen und steht im Wesentlichen senkrecht, insbesondere in der Axialrichtung 11 des Stators 100 von dem Stator 100 ab. Zur Weiterleitung der Messsignale des Temperatursensors 17 ist das Temperatursensorkabel 18 aus dem Aufnahmeraum 16 des Halteelementes 14 herausgeführt und in dem Kabelkanal 19 des Sensorhalters 12 angeordnet. Temperatursensor 17 und Wärmeleitelement 24 weisen endseitig an Spitzen 26, 27 Fasen 28, 29 auf. Ferner weist das Halteelement 14 eine Einführöffnung 30 zur Einführung des Wärmeleitelementes 24 auf. Auch die Einführöffnung 30 weist eine Fase 31 auf. Beim Fügen des Sensorhalters 12 in bzw. entgegen der Axialrichtung 11 an den Stator 100 wird somit das Wärmeleitelement 24 mit dessen Spitze 26 durch die Einführöffnung 30 in den Aufnahmeraum 16 eingeführt. Dabei bewirkt der Kontakt zwischen der Fase 28 an der Spitze 26 des Wärmeleitelementes 24 mit der Fase 31 der Einführöffnung 30 und der Fase 29 an der Spitze 27 des Temperatursensors 17, dass das Wärmeleitelement 24 parallel zum Temperatursensor 17 und ohne Blockaden in den Aufnahmeraum 16 eingeführt wird und dass der Temperatursensor 17 nicht aus dem Aufnahmeraum 16 des Halteelementes 14 in Axialrichtung 11 herausgedrückt wird.

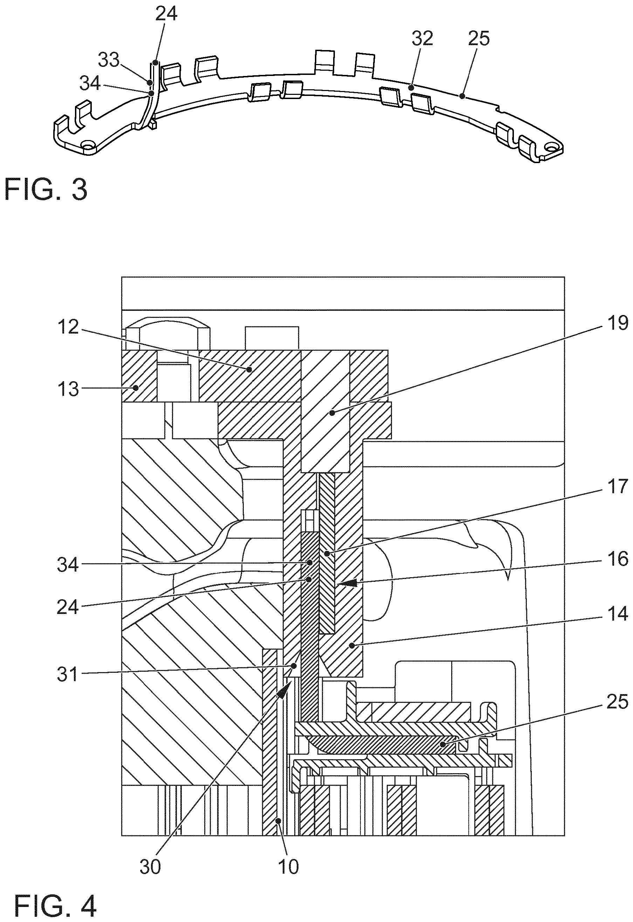

Fig. 3 zeigt eine Stromschiene 25 mit einem Wärmeleitelement 24. Die Stromschiene 25 ist im Wesentlichen in einer Erstreckungsebene 32 sich erstreckend ausgebildet und weist in der Erstreckungsebene 32 eine in etwa bogenförmige Ausgestaltung auf. Die Stromschiene 25 umfasst einen aus der Erstreckungsebene 32 herausgebogenen Teilbereich 33, welcher das Wärmeleitelement 24 bildet. Das Wärmeleitelement 24 ist insbesondere als Temperaturlanze 34 aus Kupfer ausgebildet.

Fig. 4 zeigt eine weitere Seitenansicht der Anordnung von Temperatursensor 17 und Wärmeleitelement 24 in dem Halteelement 14 des Sensorhalters 12. Die Bezugszeichen entsprechen denen der Fig. 2. Ein Unterschied gegenüber der Darstellung der Fig. 2 besteht darin, dass der Temperatursensor 17 und das Wärmeleitelement 24 keine endseitigen Fasen 28, 29 aufweisen.

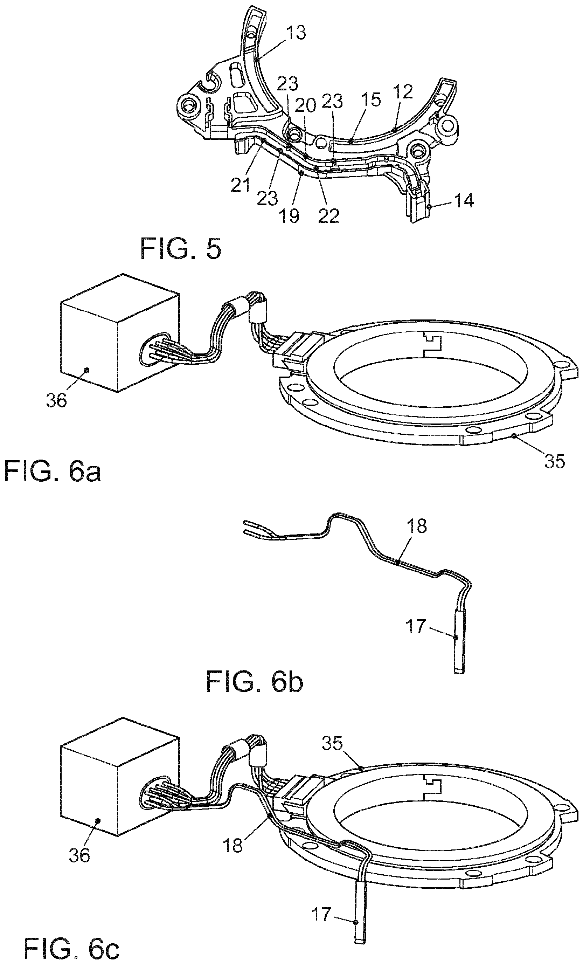

Fig. 5 zeigt eine perspektivische Darstellung des Sensorhalters 12. Der Sensorhalter 12 weist in einer Ausdehnungsebene 15 einen Hauptteil 13 auf. Das Halteelement 14 steht in etwa senkrecht zu dem Hauptteil 13 und der Ausdehnungsebene 15 ab. Deutlich erkennbar ist der Kabelkanal 19 umfassend Boden 22 und Seitenwände 20, 21 für das Temperatursensorkabel 18. Die Seitenwände 20, 21 des Kabelkanals 19 weisen Vorsprünge 23 auf, mit welchen das Temperatursensorkabel 18 in dem Kabelkanal 19 gehalten wird.

Fig. 6a bis 6c zeigen weitere mögliche Elemente des Stators 100. Der Stator 100 kann ein Gebermodul 35 für einen Winkelgeber bezeichnen. Das Gebermodul 35 und das Temperatursensorkabel 18 (Fig. 6b) werden mit einem Steckmodul 36 verbunden, wie in Fig. 6c gezeigt. Wie in Fig. 6b deutlich erkennbar ist, ist der an einem Ende des Temperatursensorkabels 18 angeordnete Temperatursensor 17 im Wesentlichen flach und länglich ausgebildet.

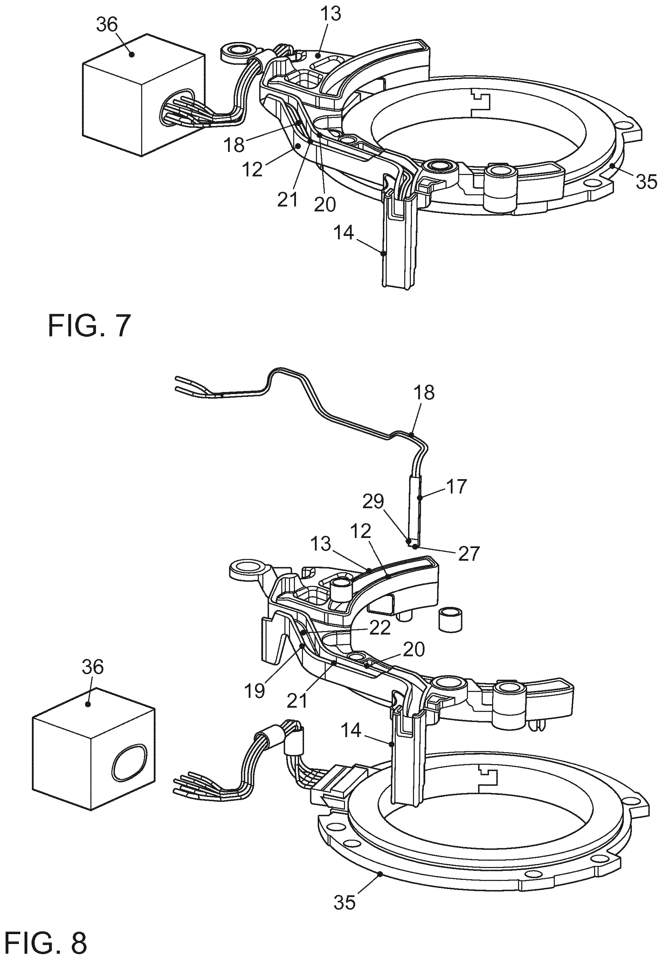

Fig. 7 zeigt die Kombination von Sensorhalter 12, Temperatursensor 17 und Gebermodul 35 nach der Montage. In der in Fig. 7 gezeigten Ausgestaltung können Gebermodul 35, Sensorhalter 12 und Temperatursensor 17 als Einheit auf dem Stator angeordnet werden. Fig. 8 entspricht der Anordnung nach Fig. 7 in einer Explosionsdarstellung.

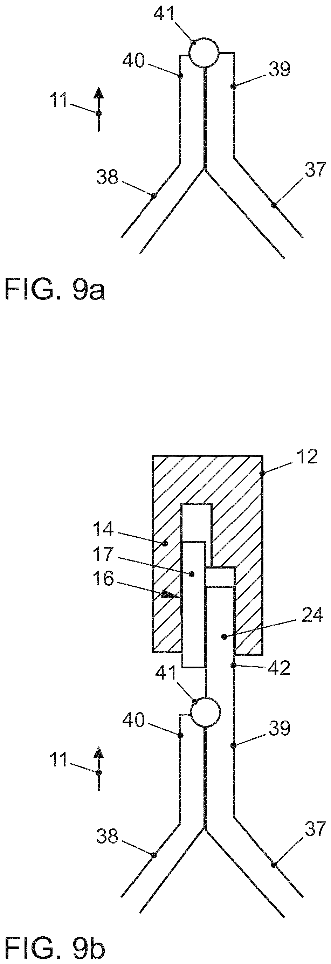

In den Fig. 9a und 9b ist in schematischer Weise die Ausbildung eines Spulenkopfes oder Wickelkopfes bei einer Hairpinwicklung gezeigt. Ein erster Hairpin 37 und ein zweiter Hairpin 38 weisen Endabschnitte 39, 40 auf, welche in einer axialen Richtung 11 aus dem Stator 100 hervorragen. Im Stand der Technik nach Fig. 9a werden die Endabschnitte 39, 40 des ersten Hairpins 37 und des zweiten Hairpins 38 an einem Schweißpunkt 41 miteinander verschweißt.

Dem gegenüber zeigt Fig. 9b eine von der Erfindung umfasste Ausgestaltung. Der erste Hairpin 37 weist gegenüber dem zweiten Hairpin 38 einen verlängerten Endabschnitt 42 auf. Der erste Hairpin 37 und der zweite Hairpin 38 werden derart miteinander verbunden, dass der verlängerte Endabschnitt 42 des ersten Hairpins 37 über den Schweißpunkt 41 und über den Endabschnitt 40 des zweiten Hairpins 38 in Axialrichtung 11 des Stators 100 hinausragt. Der verlängerte Endabschnitt 42 des ersten Hairpins 37 dient dabei als Wärmeleitelement 24. Das Halteelement 14 des Sensorhalters 12 weist einen Aufnahmeraum 16 auf, in dem ein flacher Temperatursensor 17 angeordnet ist. Das Halteelement 14 wird mit dem darin angeordneten Temperatursensor 17 in bzw. entgegen der Axialrichtung 11 auf den als Wärmeleitelement 24 ausgebildeten verlängerten Endabschnitt 42 des ersten Hairpins 37 aufgesetzt.

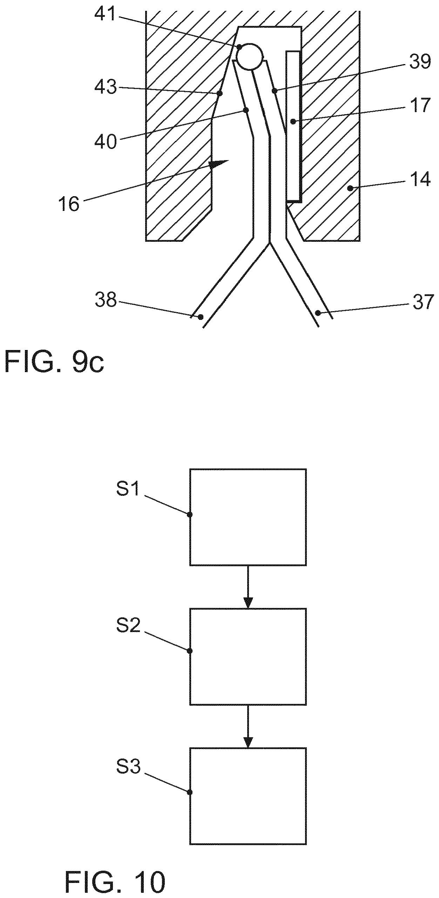

Fig. 9c zeigt eine weitere von der Erfindung umfasste Ausgestaltung. Im Unterschied zu der Ausgestaltung der Fig. 9b sind die Endabschnitte 39, 40 des ersten Hairpins 37 und des zweiten Hairpins 38 gleichlang ausgebildet. Gegenüber den (nicht dargestellten) Endabschnitten der weiteren Hairpins der Spule 10, die nicht im thermischen Kontakt mit dem Temperatursensor 17 sind, können die Endabschnitte 39, 40 verlängert sein, aber es ist auch möglich, dass die Endabschnitte 39, 40 des ersten Hairpins 37 und des zweiten Hairpins 38 genauso lang ausgebildet sind wie die (nicht dargestellten) Endabschnitte der weiteren Hairpins der Spule 10, die nicht im thermischen Kontakt mit dem Temperatursensor 17 sind. Die Endabschnitte 39, 40 des ersten Hairpins 37 und des zweiten Hairpins 38 sind ebenfalls an einem Schweißpunkt 41 miteinander verschweißt. Gegenüber der bekannten Verbindung nach Fig. 9a der Hairpins 37, 38 sind bei der Ausgestaltung der Fig. 9c die Hairpins 37, 38 jedoch in ihrem Verlauf abgeknickt ausgebildet, so dass die Endabschnitte 39, 40 in einem stumpfen Winkel abgewinkelt sind. Die Endabschnitte werden bereits vor dem Aufstecken des Halteelements 14 und vor oder nach der Herstellung des Schweißpunkts 41 abgewinkelt oder abgebogen. In dem Aufnahmeraum 16 des Haltelements 14 sind beide Endabschnitte 39, 40 aufgenommen, wobei bevorzugt nur ein Endabschnitt 39 in thermischen Kontakt mit dem Temperatursensor 17 steht. Dadurch, dass die Endabschnitte 39, 40 abgewinkelt sind, kommt der Schweißpunkt 41 beim Einführen der Endabschnitte 39, 40 in den Aufnahmeraum 16 des Halteelements 14 nicht in Kontakt mit dem Temperatursensor 17 und kann diesen nicht beschädigen. Ferner weist der obere Bereich des Aufnahmeraums 16 eine Fase 43 auf. Durch Kontakt der abgewinkelten Endabschnitte 39, 40 mit der Fase 43 werden die Hairpins 37, 38, insbesondere der erste Hairpin 37, an den Temperatursensor 17 gedrückt. Vorteil dieser Ausgestaltung ist, dass der Strom, insbesondere durch die Hairpins 37, 38, direkt an dem Temperatursensor 17 vorbeigeführt wird. Ferner ist kein neues Schweißverfahren notwendig. Die Hairpins 37 und 38 können wie alle anderen Hairpins der Spule 10 miteinander verbunden bzw. verschweißt werden.

In Fig. 10 ist ein Ablaufdiagramm für ein Verfahren zum Herstellen einer elektrischen Maschine dargestellt. In einem ersten Schritt S1 wird ein Stator 100 mit einer Spule 10 mit einer Spulenwicklung oder einer Hairpinwicklung bereitgestellt, wobei der Stator 100 ein Wärmeleitelement 24 aufweist, wobei das Wärmeleitelement 24 außerhalb der Spule 10 angeordnet ist und/oder von der Spule 10 absteht. In einem zweiten Verfahrensschritt wird ein Temperatursensor 17 in einen Aufnahmeraum 16 eines Halteelements 14 eines Sensorhalters 12 angeordnet. In einem dritten Verfahrensschritt S3 wird der Sensorhalter 12 an dem Stator 100 derart angeordnet, dass das Wärmeleitelement 24 in den Aufnahmeraum 16 des Haltelements 14 eingeführt wird, sodass der Temperatursensor 17 in direktem thermischen Kontakt mit dem Wärmeleitelement 24 steht.

### Bezugszeichenliste

- 100: Stator
- 10: Spule
- 11: Axialrichtung
- 12: Sensorhalter
- 13: Hauptteil
- 14: Halteelement
- 15: Ausdehnungsebene
- 16: Aufnahmeraum
- 17: Temperatursensor
- 18: Temperatursensorkabel
- 19: Kabelkanal
- 20: Seitenwand
- 21: Seitenwand
- 22: Boden
- 23: Vorsprung
- 24: Wärmeleitelement
- 25: Stromschiene
- 26: Spitze des Wärmeleitelements
- 27: Spitze des Temperatursensors
- 28: Fase des Wärmeleitelements
- 29: Fase des Temperatursensors
- 30: Einführöffnung
- 31: Fase der Einführöffnung
- 32: Erstreckungsebene
- 33: Teilbereich
- 34: Temperaturlanze
- 35: Gebermodul
- 36: Steckmodul
- 37: Erster Hairpin
- 38: Zweiter Hairpin
- 39: Endabschnitt
- 40: Endabschnitt
- 41: Schweißpunkt
- 42: verlängerter Endabschnitt
- 43: Fase

## Patentansprüche

1. Stator (100) für eine elektrische Maschine mit einer Spule (10) mit einer Spulenwicklung oder einer Hairpinwicklung und einem Temperatursensor (17), wobei der Stator ein Wärmeleitelement (24) aufweist, wobei der Temperatursensor (17) in direktem thermischen Kontakt mit dem Wärmeleitelement (24) angeordnet ist, wobei das Wärmeleitelement (24) außerhalb der Spule (10) angeordnet ist und/oder von der Spule (10) absteht, wobei der Stator einen Stromleiter aufweist, wobei der Stromleiter eine Stromschiene (25) ist, wobei das Wärmeleitelement (24) aus dem Stromleiter herausgeformt ist und von dem Stator in einer Axialrichtung (11) des Stators absteht, wobei das Wärmeleitelement (24) ein Teilbereich (33) des Stromleiters ist, wobei der Teilbereich (33) aus einer Erstreckungsebene (32) des Stromleiters herausgebogen ist, **dadurch gekennzeichnet dass** ein Sensorhalter (12) vorgesehen ist, wobei der Sensorhalter (12) ein Halteelement (14) mit einem Aufnahmeraum (16) aufweist, wobei der Temperatursensor (17) und das Wärmeleitelement (24) in dem Aufnahmeraum (16) angeordnet sind, sodass der Temperatursensor (17) in direktem thermischen Kontakt mit dem Wärmeleitelement (24) steht, wobei die Stromschiene (25) eine Sternschiene oder ein Neutralleiter einer Sternschaltung ist, dass der Sensorhalter (12) einen Hauptteil (13) aufweist, wobei der Hauptteil (13) sich im Wesentlichen in einer Ausdehnungsebene (15) erstreckt, dass der Sensorhalter (12) an einer axialen Stirnfläche des Stators angeordnet ist, sodass die Ausdehnungsebene (15) im Wesentlichen senkrecht zur Axialrichtung (11) des Stators ausgerichtet ist, dass das Halteelement (14) im Wesentlichen senkrecht zu der Ausdehnungsebene (15) an dem Hauptteil (13) des Sensorhalters (12) angeordnet ist, dass das Halteelement (14) eine Einführöffnung (30) zum Einführen des Wärmeleitelements (24) aufweist, wobei der Aufnahmeraum (16) derart ausgebildet ist, dass das Wärmeleitelement (24) beim Einführen des Wärmeleitelementes (24) in den Aufnahmeraum (16) durch die Einführöffnung (30) parallel zum Temperatursensor (17) geführt wird und neben dem Temperatursensor (17) angeordnet ist, und dass das Wärmeleitelement (24) und der Temperatursensor (17) endseitig eine Fase (28, 29) aufweisen, sodass der Temperatursensor (17) und das Wärmeleitelement (24) beim Einführen des Wärmeleitelementes (24) in den Aufnahmeraum (16) durch die Einführöffnung (30) aneinander gleitend vorbeigeführt werden.

2. Stator (100) nach Anspruch 1, **dadurch gekennzeichnet, dass** das Wärmeleitelement (24) eine Temperaturlanze (34), insbesondere eine Temperaturlanze (34) aus Kupfer, ist.

3. Stator (100) nach Anspruch 1 oder 2, **dadurch gekennzeichnet, dass** der Stator ein Hairpin-Stator ist und dass das Wärmeleitelement (24) aus der Spule (10), insbesondere aus einem Spulenkopf der Spule (10), hervorsteht.

4. Stator (100) nach einem der vorgenannten Ansprüche, **dadurch gekennzeichnet, dass** das Wärmeleitelement (24) in einem Winkel zu einer Erstreckungsebene (32) des Stromleiters steht.

5. Stator (100) nach einem der vorgenannten Ansprüche, **dadurch gekennzeichnet, dass** der Sensorhalter (12), insbesondere der Hauptteil (13) des Sensorhalters (12), einen Kabelkanal (19) aufweist, wobei der Kabelkanal (19) einen Boden (22) und Seitenwände (20, 21) aufweist, wobei ein Temperatursensorkabel (18) in dem Kabelkanal (19) anordbar oder angeordnet ist.

6. Verfahren zum Herstellen einer elektrischen Maschine nach einem der vorgenannten Ansprüche, umfassend die Schritte:
- S1: Bereitstellen eines Stators (100) mit einer Spule (10) mit einer Spulenwicklung oder einer Hairpinwicklung, wobei der Stator (100) ein Wärmeleitelement (24) aufweist, wobei das Wärmeleitelement (24) außerhalb der Spule (10) angeordnet ist und/oder von der Spule (10) absteht, wobei der Stator einen Stromleiter aufweist, wobei der Stromleiter eine Stromschiene (25) ist, wobei die Stromschiene (25) eine Sternschiene oder ein Neutralleiter einer Sternschaltung ist, und wobei das Wärmeleitelement (24) aus dem Stromleiter herausgeformt wird und von dem Stator in einer Axialrichtung (11) des Stators absteht, wobei das Wärmeleitelement (24) ein Teilbereich (33) des Stromleiters ist, wobei der Teilbereich (33) aus einer Erstreckungsebene (32) des Stromleiters herausgebogen ist,
- S2: Anordnen eines Temperatursensors (17) in einen Aufnahmeraum (16) eines Halteelements (14) eines Sensorhalters (12), wobei der Sensorhalter (12) einen Hauptteil (13) aufweist, wobei der Hauptteil (13) sich im Wesentlichen in einer Ausdehnungsebene (15) erstreckt, wobei das Halteelement (14) im Wesentlichen senkrecht zu der Ausdehnungsebene (15) an dem Hauptteil (13) des Sensorhalters (12) angeordnet ist, wobei das Halteelement (14) eine Einführöffnung (30) zum Einführen des Wärmeleitelements (24) aufweist,
- S3: Anordnen des Sensorhalters (12) an einer axialen Stirnfläche des Stators (100) derart, dass die Ausdehnungsebene (15) im Wesentlichen senkrecht zur Axialrichtung (11) des Stators ausgerichtet ist und dass das Wärmeleitelement (24) durch die Einführöffnung (30) in den Aufnahmeraum (16) des Halteelements (14) eingeführt wird, sodass der Temperatursensor (17) in direktem thermischen Kontakt mit dem Wärmeleitelement (24) steht, wobei das Wärmeleitelement (24) beim Einführen des Wärmeleitelementes (24) in den Aufnahmeraum (16) durch die Einführöffnung (30) parallel zum Temperatursensor (17) geführt wird und neben dem Temperatursensor (17) angeordnet wird, wobei das Wärmeleitelement (24) und der Temperatursensor (17) endseitig eine Fase (28, 29) aufweisen, sodass der Temperatursensor (17) und das Wärmeleitelement (24) beim Einführen des Wärmeleitelementes (24) in den Aufnahmeraum (16) durch die Einführöffnung (30) aneinander gleitend vorbeigeführt werden.

## Claims

1. Stator (100) for an electric machine having a coil (10) with a coil winding or a hairpin winding and a temperature sensor (17), wherein the stator has a thermally conductive element (24), wherein the temperature sensor (17) is arranged in direct thermal contact with the thermally conductive element (24), wherein the thermally conductive element (24) is arranged outside the coil (10) and/or protrudes from the coil (10), wherein the stator has a current conductor, wherein the current conductor is a busbar (25), wherein the thermally conductive element (24) is formed from the current conductor and protrudes from the stator in an axial direction (11) of the stator, wherein the thermally conductive element (24) is a subregion (33) of the current conductor, wherein the subregion (33) is bent out of a plane of extent (32) of the current conductor, **characterized in that** a sensor holder (12) is provided, wherein the sensor holder (12) has a holding element (14) with a receiving space (16), wherein the temperature sensor (17) and the thermally conductive element (24) are arranged in the receiving space (16), so that the temperature sensor (17) is in direct thermal contact with the thermally conductive element (24), wherein the busbar (25) is a star bar or a neutral conductor of a star circuit, **in that** the sensor holder (12) has a main part (13), wherein the main part (13) extends substantially in an plane of extent (15), **in that** the sensor holder (12) is arranged on an axial end surface of the stator, so that the plane of extent (15) is oriented substantially perpendicularly to the axial direction (11) of the stator, **in that** the holding element (14) is arranged substantially perpendicularly to the plane of extent (15) on the main part (13) of the sensor holder (12), **in that** the holding element (14) has an insertion opening (30) for inserting the thermally conductive element (24), wherein the receiving space (16) is formed in such a way that the thermally conductive element (24), when the thermally conductive element (24) is inserted into the receiving space (16), is guided through the insertion opening (30) parallel to the temperature sensor (17) and is arranged next to the temperature sensor (17), and **in that** the thermally conductive element (24) and the temperature sensor (17) have a chamfer (28, 29) at their end sides, so that the temperature sensor (17) and the thermally conductive element (24), when the thermally conductive element (24) is inserted into the receiving space (16), are guided past each other in a sliding manner through the insertion opening (30).

2. Stator (100) according to Claim 1, **characterized in that** the thermally conductive element (24) is a temperature lance (34), in particular a temperature lance (34) composed of copper.

3. Stator (100) according to Claim 1 or 2, **characterized in that** the stator is a hairpin stator, and **in that** the thermally conductive element (24) projects out of the coil (10), in particular out of a coil head of the coil (10).

4. Stator (100) according to any of the preceding claims, **characterized in that** the thermally conductive element (24) extends at an angle in relation to a plane of extent (32) of the current conductor.

5. Stator (100) according to any of the preceding claims, **characterized in that** the sensor holder (12), in particular the main part (13) of the sensor holder (12), has a cable duct (19), wherein the cable duct (19) has a base (22) and side walls (20, 21), wherein a temperature sensor cable (18) can be arranged or is arranged in the cable duct (19).

6. Method for producing an electric machine according to any of the preceding claims, comprising the steps of:
- S1: providing a stator (100) having a coil (10) with a coil winding or a hairpin winding, wherein the stator (100) has a thermally conductive element (24), wherein the thermally conductive element (24) is arranged outside the coil (10) and/or protrudes from the coil (10), wherein the stator has a current conductor, wherein the current conductor is a busbar (25), wherein the busbar (25) is a star bar or a neutral conductor of a star circuit, and wherein the thermally conductive element (24) is formed from the current conductor and protrudes from the stator in an axial direction (11) of the stator, wherein the thermally conductive element (24) is a subregion (33) of the current conductor, wherein the subregion (33) is bent out of a plane of extent (32) of the current conductor,
- S2: arranging a temperature sensor (17) in a receiving space (16) of a holding element (14) of a sensor holder (12), wherein the sensor holder (12) has a main part (13), wherein the main part (13) extends substantially in an plane of extent (15), wherein the holding element (14) is arranged substantially perpendicularly to the plane of extent (15) on the main part (13) of the sensor holder (12), wherein the holding element (14) has an insertion opening (30) for inserting the thermally conductive element (24),
- S3: arranging the sensor holder (12) on an axial end surface of the stator (100) in such a way that the plane of extent (15) is oriented substantially perpendicularly to the axial direction (11) of the stator, and in that the thermally conductive element (24) is inserted through the insertion opening (30) into the receiving space (16) of the holding element (14), so that the temperature sensor (17) is in direct thermal contact with the thermally conductive element (24), wherein the thermally conductive element (24), when the thermally conductive element (24) is inserted into the receiving space (16), is guided through the insertion opening (30) parallel to the temperature sensor (17) and is arranged next to the temperature sensor (17), wherein the thermally conductive element (24) and the temperature sensor (17) have a chamfer (28, 29) at their end sides, so that the temperature sensor (17) and the thermally conductive element (24), when the thermally conductive element (24) is inserted into the receiving space (16), are guided past each other in a sliding manner through the insertion opening (30).

## Revendications

1. Stator (100) destiné à une machine électrique et comprenant une bobine (10), pourvue d'un enroulement de bobine ou d'un enroulement en épingle à cheveux, et un capteur de température (17), le stator comportant un élément thermoconducteur (24), le capteur de température (17) étant disposé en contact thermique direct avec l'élément thermoconducteur (24), l'élément thermoconducteur (24) étant disposé à l'extérieur de la bobine (10) et/ou faisant saillie de la bobine (10), le stator comportant un conducteur de courant, le conducteur de courant étant une barre conductrice (25), l'élément thermoconducteur (24) étant formé à partir du conducteur de courant et faisant saillie du stator dans une direction axiale (11) du stator, l'élément thermoconducteur (24) étant une partie (33) du conducteur de courant, la partie (33) étant incurvée hors d'un plan d'extension (32) du conducteur de courant, **caractérisé en ce qu'**un support de capteur (12) est prévu, le support de capteur (12) comportant un élément de retenue (14) pourvu d'un espace de réception (16), le capteur de température (17) et l'élément thermoconducteur (24) étant disposés dans l'espace de réception (16) de sorte que le capteur de température (17) soit en contact thermique direct avec l'élément thermoconducteur (24), la barre conductrice (25) étant une barre d'étoile ou un conducteur neutre d'un circuit en étoile, **en ce que** le support de capteur (12) comporte une partie principale (13), la partie principale (13) s'étendant sensiblement dans un plan d'extension (15) de sorte que le support de capteur (12) soit disposé sur une face frontale axiale du stator de sorte que le plan d'extension (15) soit orienté sensiblement perpendiculairement à la direction axiale (11) du stator, **en ce que** l'élément de retenue (14) est disposé sensiblement perpendiculairement au plan d'extension (15) sur la partie principale (13) du support de capteur (12), **en ce que** l'élément de retenue (14) comporte une ouverture d'insertion (30) destinée à insérer l'élément thermoconducteur (24), l'espace de réception (16) étant conçu de telle sorte que, lorsque l'élément thermoconducteur (24) est inséré dans l'espace de réception (16), l'élément thermoconducteur (24) soit guidé à travers l'ouverture d'insertion (30) parallèlement au capteur de température (17) et soit disposé à côté du capteur de température (17), et **en ce que** l'élément thermoconducteur (24) et le capteur de température (17) comportent un chanfrein (28, 29) à leur extrémité de sorte que, lors de l'insertion de l'élément thermoconducteur (24) dans l'espace de réception (16), le capteur de température (17) et l'élément thermoconducteur (24) peuvent être guidés l'un devant l'autre à travers l'ouverture d'insertion (30) .

2. Stator (100) selon la revendication 1, **caractérisé en ce que** l'élément thermoconducteur (24) est une lance de température (34), notamment une lance de température (34) en cuivre.

3. Stator (100) selon la revendication 1 ou 2, **caractérisé en ce que** le stator est un stator en épingle à cheveux et **en ce que** l'élément thermoconducteur (24) fait saillie de la bobine (10), notamment d'une tête de bobine de la bobine (10).

4. Stator (100) selon l'une des revendications précédentes, **caractérisé en ce que** l'élément thermoconducteur (24) fait un angle par rapport à un plan d'extension (32) du conducteur de courant.

5. Stator (100) selon l'une des revendications précédentes, **caractérisé en ce que** le support de capteur (12), notamment la partie principale (13) du support de capteur (12), comporte un chemin de câbles (19), le chemin de câbles (19) comportant un fond (22) et des parois latérales (20, 21), un câble de capteur de température (18) étant disposé ou pouvant être disposé dans le chemin de câble (19).

6. Procédé de fabrication d'une machine électrique selon l'une des revendications précédentes, ledit procédé comprenant les étapes suivantes :
- S1 : fournir stator (100) comprenant une bobine (10), pourvue d'un enroulement de bobine ou d'un enroulement en épingle à cheveux, le stator (100) comportant un élément thermoconducteur (24), l'élément thermoconducteur (24) étant disposé à l'extérieur de la bobine (10) et/ou faisant saillie de la bobine (10), le stator comportant un conducteur de courant, le conducteur de courant étant une barre conductrice (25), la barre conductrice (25) étant une barre d'étoile ou un conducteur neutre d'un circuit en étoile, et l'élément thermoconducteur (24) étant formé à partir du conducteur de courant et faisant saillie du stator dans une direction axiale (11) du stator, l'élément thermoconducteur (24) étant une partie (33) du conducteur de courant, la partie (33) étant incurvée hors d'un plan d'extension (32) du conducteur de courant,
- S2 : disposer un capteur de température (17) dans un espace de réception (16) d'un élément de retenue (14) d'un support de capteur (12), le support de capteur (12) comportant une partie principale (13), la partie principale (13) s'étendant sensiblement dans un plan d'extension (15), l'élément de retenue (14) étant disposé sensiblement perpendiculairement au plan d'extension (15) sur la partie principale (13) du support de capteur (12), l'élément de retenue (14) comportant une ouverture d'insertion (30) destinée à insérer l'élément thermoconducteur (24),
- S3 : disposer le support de capteur (12) sur une face frontale axiale du stator (100) de telle sorte que le plan d'extension (15) soit orienté sensiblement perpendiculairement à la direction axiale (11) du stator et que l'élément thermoconducteur (24) soit inséré dans l'espace de réception (16) de l'élément de retenue (14) à travers l'ouverture d'insertion (30) de sorte que le capteur de température (17) soit en contact thermique direct avec l'élément thermoconducteur (24), l'élément thermoconducteur (24) étant guidé parallèlement au capteur de température (17) à travers l'ouverture d'insertion (30) lors de l'insertion de l'élément thermoconducteur (24) dans l'espace de réception (16) et étant disposé à côté du capteur de température (17), l'élément thermoconducteur (24) et le capteur de température (17) comportant un chanfrein (28, 29) à leur extrémité de sorte que le capteur de température (17) et l'élément thermoconducteur (24) peuvent être guidés l'un devant l'autre à travers l'ouverture d'insertion (30) lors de l'insertion de l'élément thermoconducteur (24) dans l'espace de réception (16).
